Europäisches Patentamt

European Patent Office

Office européen des brevets

(11) Publication number: **0 185 625**
**A1**

## EUROPEAN PATENT APPLICATION

(21) Application number: **85830262.3**

(22) Date of filing: **15.10.85**

(51) Int. Cl.⁴: **H 04 N 5/64**
**A 47 B 96/20**

(30) Priority: **15.10.84 IT 2314384**

(43) Date of publication of application:
**25.06.86 Bulletin 86/26**

(84) Designated Contracting States:
**BE DE FR GB NL**

(71) Applicant: **Corna, Carlo**
**Piazza Cavour, 15**
**I-24069 Trescore Balneario (BG)(IT)**

(72) Inventor: **Corna, Carlo**
**Piazza Cavour, 15**
**I-24069 Trescore Balneario (BG)(IT)**

(74) Representative: **Adorno, Silvano et al,**
**c/o SOCIETA' ITALIANA BREVETTI S.p.A. Via Carducci, 8**
**I-20123 Milano(IT)**

(54) Set of plastic mouldings to form a housing, particularly for a television receiver.

(57) A set of plastic moldings to form, when assembled a case such as for housing a TV receiver, comprises at least a substantially bidimensional shaped strip, made of a single sheet of plastics having a suitable profile with at least three portions of greater thickness to form the panels for each side of the case. Between each of said thicker portions and the adjacent ones there is provided a thin length of material allowing the strip to be bent with a bending radius in the range of from 4 to 40mm, whereby the edges of the assembled case are of rounded shape. Other members forming the assembly are a possible fourth side or base of the case, to be fitted in suitable guides at the ends of said strip when this comprises only three panels, and reinforcing angular joints in the bending zones, to be snap clamped at the ends of two adjacent thicker portions. Thus no glueing, melting, subsequent molding of the panels on a laminated plastic sheet or extrusion of the panels on the sheet is required, but only a single operation of injection molding and subsequent mechanical assembly with merely the aid of the snap joints.

Fig. 3

"ASSEMBLY SET OF PLASTIC MOLDINGS FOR ASSEMBLING A
FOUR-SIDE CASE, PARTICULARLY FOR TV RECEIVER COMPRISING
A SHAPED STRIP TO FORM AT LEAST THREE SIDES THEREOF"

The present invention relates to a set of plastic moldings for assembling a four-sided cabinet or case, especially for a TV receiver. Basic element of this set is a continuous strip, substantially bidimensional and suitably shaped to have integrally therewith any coupling means for the final assembly of the cabinet, in combination with angular joints.

A laminated case with rounded edges is known from EP-A-62013 in the name of the same applicant, which is assembled from a substantially two-dimensional continuous strip comprising three or four panels of plastic glued or anyhow applied onto a laminated sheet forming the outer veneering. It is however clear that a strip so constructed, although providing an important step forward in the technology of manufacturing forniture for TV receivers, as it allows a reduction to minimum of the overall size during transportation, on the contrary involves production time and costs which are rather high due to application of the rigid panels onto the continuous flexible laminated. As a matter of fact it was thought that this were the sole solution permitting a combination of having both the possibility of bending the strip itself at the cabinet corners and at the same time a good solidity at the side walls of the case. Furthermore, each fastening and detent means, made as a snap fitting integrally formed on the strip itself, is an additional important complication of the moulds, so that the adoption of a single molding operation was even more to be avoided.

It is the object of the present invention to provide a set for assembling forniture of the above-mentioned type, comprising a substantially bidimensional strip of plastic material adapted to provide the major portion, i.e. at least three sides, of a case or cabinet, integrally formed by injection molding, the strip having at least three zones of greater thickness providing the side panels of the case, which are spaced out by means of thinner, more flexible portions. The width of these flexible portions, of reduced thickness, determines the bending radius of the case edges which, according to the invention and as a function of the material used and the thickness adopted, varies from a minimum of 4 mm to a maximum of 40 mm as outer radius.

Furthermore the assembly set of the invention provides a possible bottom panel to be slidably fitted in suitable guides, as already known by the above-mentioned patent application, and reinforcing angular joints to be snap clamped, the backing member of which at the edges will conform to the width and thickness of the thin bending zone. The fact of using angular reinforcing joints as members separate from the strip allows a less complicated strip mold and thereby lower costs, this however causing no reduction of readiness in the case assembly.

According to a further characteristic of the invention, the moldings to be assembled are already formed with eyelets and reference shoulders for mounting the cathode ray tube and securing a rear covering panel.

These and additional objects, advantages and features of the set of moldings according to the invention will be clearer from the following description of a preferred embodiment thereof, given by way of non-limiting example only, with reference to the drawings, in which:

FIGURE 1 shows a top plan view of the set with strip according to the invention, with the two angular joints detached from the strip;

FIGURE 2 shows a side view of the same set, taken in the direction of arrow A of Fig. 1;

FIGURES 3 and 4 respectively show two subsequent steps of clamping an angular joint onto the strip and forming the left hand (upper) edge of the case, wherein Fig. 3 shows the angular joint fastened to the strip at one side only, and Fig. 4 illustrates the angular joint anchored at both sides to form said edge, in similar, partially sectioned, perspective views; and

FIGURE 5 shows a perspective view of the assembly, ready to be used as a TV receiver case.

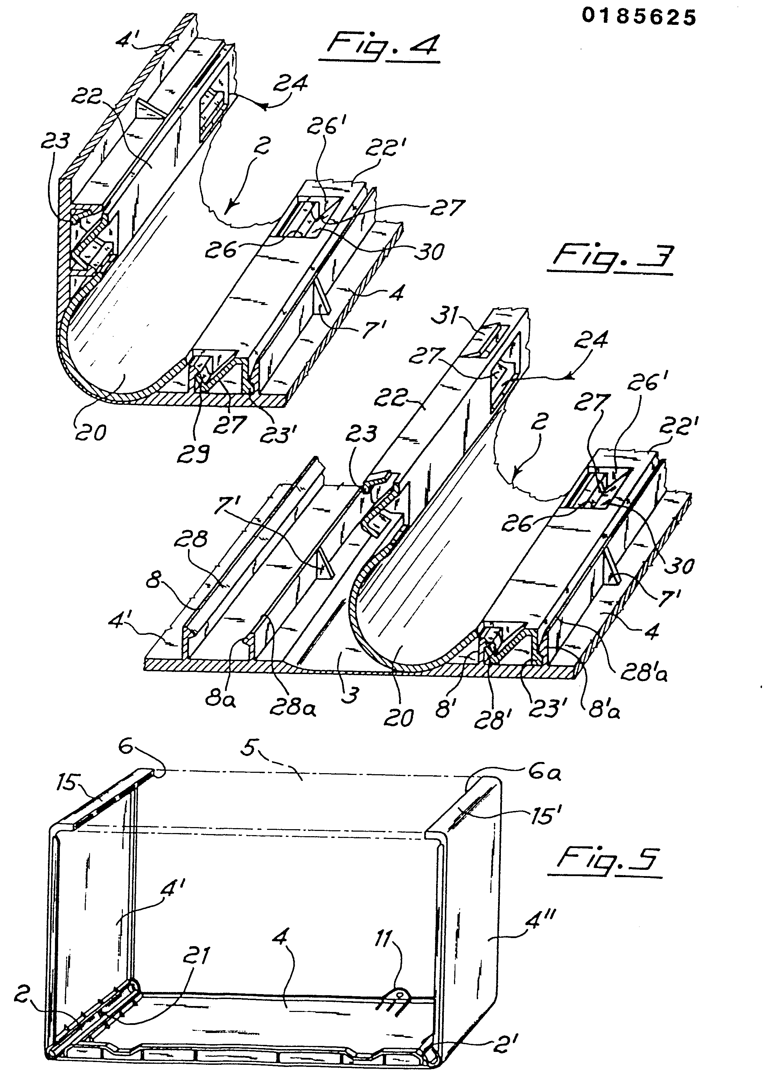

With reference to the drawings, the assemblable set of the invention comprises a shaped strip 1, substantially bidimensional and at at least two angular joints 2, 2', to be snap clamped onto zones 3, 3' of the strip having a reduced thickness. In the embodiment shown in the drawings, these zones of lower thickness 3, 3' are, like the angular joints, in number of two and space apart three zones 4, 4', 4" of greater thickness. In this case the set is assembled, upon having fastened the two angular joints to keep the two outer portions 4', 4" at right angles respectively with the central portion 4, as shown in Figs. 3 and 4, and takes the shape of Fig. 5, thereafter being completed at the missing side with a panel 5 fitted and fixed between the two outer ends 6, 6a of the strip 1 in a known manner, such as described in the EP-A-62013.

The panel 5, being an integrating portion of the assembly, while it is not a part of the invention, is usually designed to be the base of the assembled cabinet, whereby the finished case including the TV receiver will be placed upside down with respect to the position shown in Fig. 5.

Of course it could be provided, although less preferable, a set of moldings wherein the assembly strip shows four portions of greater thickness, one of which is adapted to form the base of the assembled case, with the aid of three angular joints and suitable coupling means at both ends of the strip, which ends in this embodiment come into contact each other along an edge of the case having no angular joint.

The strip 1, of plastic material such as of the shock-resistant polystyrene type, has a central portion 4, as already mentioned above, which is designed to form the upper side of the case, and two outer portions 4', 4", designed to form the two sides of the cabinet, all being of the same thickness and having reinforcement and stiffening ribs 7 at the ends 6, 6a. Additional ribs 7', parallel to the ribs 7, but of smaller length than these are provided extending from pairs of transverse ribs 8 formed at both sides of each reduced thickness portion 3, 3' to be bent. Additional reinforcing and finishing ribs 9, 9' are provided, at the front and the rear side of the cabinet, respectively, along the longitudinal edges of the thicker portions 4, 4', 4" which in the following will be called upper central panel and side panels. At the upper central panel 4, the rear edge 9' has the shape of a ledge 10 having a thickness greater than the corresponding ribs on the other sides designed to form the abutment shoulder for the closure back of the case (not shown). Two brackets 11, 12 each having a through hole are also provided, still integrally formed by molding with the strip 1, on the opposite side 9 of the upper panel, for coupling with the front side of the cathode ray tube. One of the two brackets, more precisely the one designated 12 in the drawing, is located near one of the two bending zones with reduced thickness, that is the left-hand one in the drawing, designated 3. In association with the bracket 11 there are provided stiffening transverse ribs 14 for a better withstanding the stresses caused in this area by coupling with the cathode ray tube. Obviously, also integrally formed with the strip 1, other members of support, connection or reference can be provided, already pre-arranged for mounting the various components of the apparatus. For example two recesses 13, 13' interrupting the ledge 10 serve for mounting the cathode ray tube.

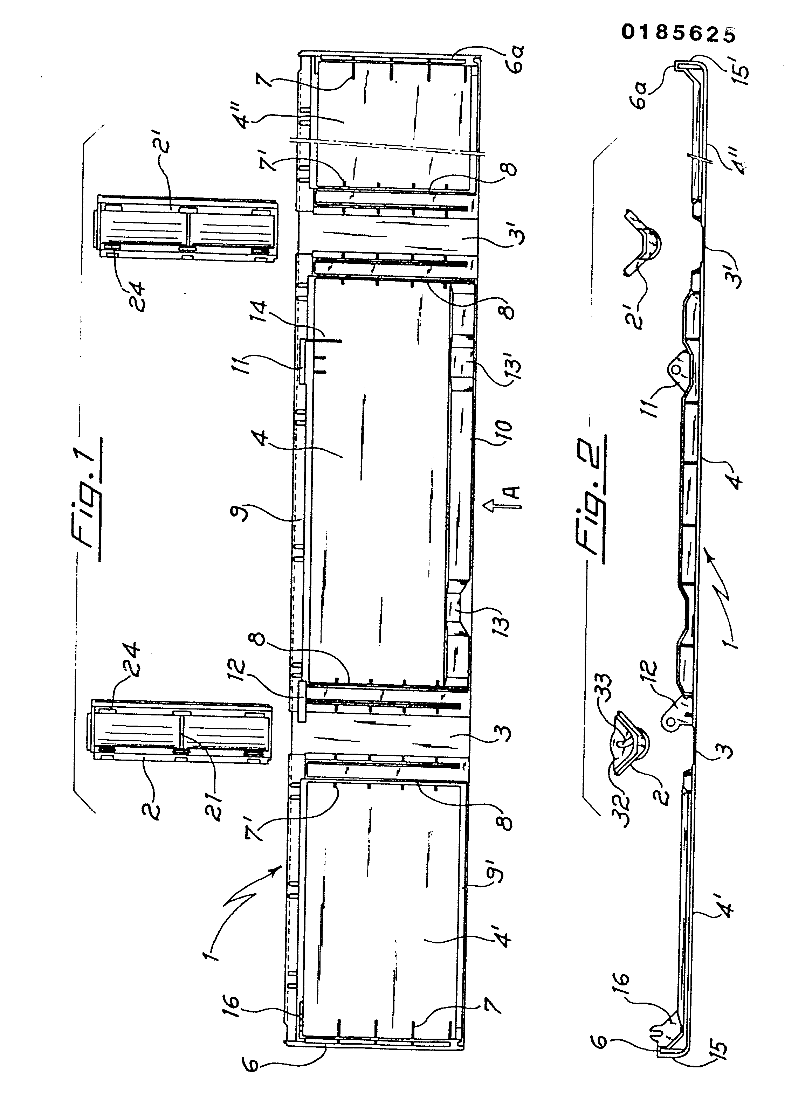

The two outer ends 6, 6a of the strip, as is better seen in Fig. 2, have two bent flanges 15, 15' designed to be co-planar upon assembling the whole set (see Fig. 5) and to house therebetween the base panel 5. The guides for a slidable fitting of base 5 are pre-arranged at the free end of the two flanges 15, 15' in a way known e.g. from the above-mentioned prior patent application. As is better seen in Fig. 2, an additional bracket 16 may be provided at the left hand end 6 to integrally connect flange 15 and the front edge 9 of the side wall 4', having the same function of the other two brackets 11, 12.

Referring now in particular to Figs. 3, 4, there is shown the coupling means 24 for fastening the angular joints to the strip 1 to keep the bending at 90° at the corners. To this end the ribs of each pair of transverse ribs 8, which are provided as stated above, at side of each bending zone with reduced thickness, are formed with a detent or "click" means facing the other rib of the pair of ribs. Taking as an example the portion of left-hand angular joint 2 near the backward side, in other words by the edge 9' of panels 4, 4', Fig. 3 shows the joint 2 fastened on one side to the panel 4, while the other side is free and the strip is still in its planar configuration. Fig. 4 instead shows also the other side of the angular joint 2 fastened to the side panel 4' which has rotated by 90° to the central panel 4. It will be appreciated that the thickness of the angular joint 2, in its curved, nearly semicircular portion 20, is such that, being added to the thickness of portion 3 which surrounds it externally, substantially corresponds to the thickness of panels 4, 4', whereby no weakening is experienced in the bending zone, which is stiffened by the angular joint 2 acting as a corner backing member. Thus it is possible to achieve the bending through the adoption of reduced thickness at the portion 3, while maintaining the same characteristics of mechanical strength as in the other portions of the structure. Each angular joint 2 comprises a U-shaped rigid channel-type central portion 20, substantially semi-circular, preferably provided with a central stiffening rib 21, having a crescent-like shape. This channel portion 20 extends itself, at both sides of its longitudinal edges with two bands, respectively 22, 22' in two planes generally perpendicular each other. Each band 22, 22' extends outwardly with a tab 23, 23' respectively, directed perpendicularly and for a short length, toward the bottom of channel 20. Each band 22, 22' has the same number of coupling means 24 mutually facing and shown in number of three in Fig. 1.

Each coupling or fitting zone 24 is snap engageable at the same time with the above-mentioned detents formed on the corresponding pair of ribs 8.

More specifically, with reference to Figs. 3, 4, where have been designated respectively 8, 8a the left-hand pair of ribs and 8', 8'a the pair of ribs on the right-hand of the bending zone 3, the outer ribs of each pair 8, 8'a have a detent or "click" 28, 28'a, respectively, parallel to the strip plane and extending toward the bending zone. These outer ribs 8, 8'a have a length greater than the inner ribs 8a, 8' which are formed with a detent 28a, 28' respectively, also parallel to the strip plane and directed away from the bending zone 3, being opposite to the associate detent of each pair of ribs, but at a lower location. With reference to the band 22', each fitting zone 24 corresponds to a rectangular opening 30 defined by two parallel walls 26, 26' extending downward to reach the level of the lower edge of tab 23, and by an inclined tongue 27 which joins these two walls from the upper face to the lower edge of the walls, having an upwardly bent hook-shaped tail piece 29. Furthermore, at each coupling zone 24 the tab 23 is cut to form a tongue 31 extending from the lower edge of the tab with its free end directed to the upper band 22 and being slightly inclined outward ly so that the free end projects (by about 1 mm only) with respect to the surface of tab 23. The tongue 31 is designed to engage the detent 28 of rib 8 upon bending, and at the same time the tail 29 will engage rib 28a. Of course the distance between tab 23 and tail 29 will correspond, except for a minimum clearance, to the spacing between the two associate ribs 8, 8a.

It will be appreciated that what has been described for a coupling 24 at the left-hand side of the angular joint 2 is also valid for all the other couplings of the same side, like for those at the opposite side of the same joint and for the other angular joint 2'. It should be noted also that special arrangements will be provided to facilitate the mutual engagements of the various portions, such as angled bevels for the detents and a small drop-shaped relief on the convex surface of the channel 20 at the level of each coupling zone 24, such as to act as a guide for the inner rib 8a before its detent 28a is grasped by the tail 29. As shown in Fig. 2, the front end of the angular joint 2 is formed with a bracket 32 joining the two side bands 22, 22' and provided with an elongated slot 33 co-operat_ing  with the through hole of bracket 12 for passing suitable cathode ray tube anchoring means therethrough.

It appears clearly how the set of the invention should be used to form a parallelepiped case, especially for a TV receiver. Two angular joints 2, 2' are applied to the pre-formed assembly strip as defined above, at both ends of the central portion 4, in such a way that the clamping means of the joints enter into engagement with the detents of the corresponding ribs of the zone 4 and thereby the inner band of each joint is snap fastened to the central panel 4, while the outer band is still free. Fig. 3 shows this situation for the left-hand angular joint 2, and similarly for the right-hand joint 2' will be correspondingly fastened the band 22 while the band 22' is free. Thereafter the two side panels 4', 4" are caused to rotate so as the respective bending zone 3, 3' with reduced thickness conforms to the curve of the channel rigid portion 20 of the associate joint, thereupon the snap coupling, merely by pressure, is carried out between the outer bands of the angular joints and the associate ribs of side panels 4, 4" in a position nearly perpendicular to the central panel 4. It should be noted that, according to the invention, the bending radius of channel 20, and consequently of the rounded edge of the assembled cabinet, may vary in a range of from 4 to 40 mm (outer radius) as a function of the material used and the thickness adopted.

Sunsequently, if the strip is formed of three panels as the one shown in the drawings, the further step is the fitting of base panel 5, confined between the ends 6, 6a of the strip 1 whereas, if also the base 5 is a portion of an assembly strip with four panels, a further bending by 90° of the latter member is carried on, by means of a third angular joint, and the assembly is accomplished with the complete folding of the strip, finally securing suitably each other the two ends thereof in an abutting relationship. Then the cathode ray tube and all the other components will be inserted therein, and anchored also through the use of the mountings, supports and references defined above, being part of the strip itself, whereupon the rear and the front cover panels will be applied.

CLAIMS

1. An assembly set of plastic mouldings for assembling a four-sided case or cabinet, in particular for a TV receiver, comprising a substantially bidimensional shaped strip (1) to form at least three sides of said case, characterized by said strip (1) being formed of one single sheet of plastics which comprises at least three zones (4, 4', 4") of greater thickness suitable to provide three sides of the case, spaced apart by thinner bending zones (3, 3'), on either side of each of said thinner zones, there being provided pairs of ribs (8, 8a; 8', 8'a) having hooking means (28, 28a; 28', 28'a), the set also comprising bending joints (2, 2') substantially formed of a channel-shaped rigid member (20), generally semi-circular with two side bands (22, 22') extending in two mutually perpendicular planes and two tabs (23, 23') each of them extending at right angles from the outer edge of the respective band (22, 22') toward the bottom of said channel (20), in each of said side bands there being provided coupling means (24) for a snap engagement with said hooking means (28, 28a) upon bending the thin length (3) around the channel portion (20) of each joint (2, 2').

2. An assembly set according to claim 1, characterized by the fact that the total thickness of the thin zone (3) added to that of the channel portion (20) is the same as the thickness of the other zones (4, 4', 4") of the strip (1).

3. An assembly set according to claim 1, characterized by the fact that each coupling means (24) comprises an L-shaped engagement member (27, 29) extending from a respective opening (30) formed in said side band (22, 22'), and a tongue (31) cut in said tab (23, 23'), slightly projecting to the outside at its free end which faces a direction opposite to the free end of the tab itself.

4. An assembly set according to claim 3, wherein for each pair of said ribs the rib (8a, 8') nearer to the thin bending zone (3, 3') projects from the strip (1) with a lower length than the length of projection of the other rib in the same pair of ribs, the hooking means of the ribs in each pair of ribs being directed facing to each other.

5. An assembly set according to claim 4, wherein said hooking means (28, 28a; 28', 28'a) of each pair of ribs associate to a bending zone (3, 3') of reduced thickness are detents adapted for engagement with said coupling means (24), and precisely so that the detent (28) of the higher outer rib (8) engages the tongue (31) and the detent (28a) of the lower inner rib (8a) engages the L-shaped member (27, 29) of one of the two side bands of the bending joint (2, 2') which is to be associated with said bending zone (3).

6. An assembly set according to one or more of the preceding claims, further comprising stiffening ribs (7, 7') directed in the longitudinal direction of the strip, respectively at the ends (6, 6') of the same strip and departing from said transverse ribs (8).

7. An assembly set according to one or more of the preceding claims, wherein the central portion (4) of strip (1) is formed with a thicker edge (10) along a longitudinal side (9') and, along the opposite side (9'), with two projecting brackets (11, 12) having a through hole, one of which (12) being near the thin zone (3) so that the associate hole matches, upon assemblage, with an elongated hole (33) in a bracket (32) joining the side bands (22, 22') of the associate joint (2).

*Fig.1*

*Fig.2*

_Fig.4_

_Fig.3_

_Fig.5_

0185625

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,A | EP-A-0 062 013 (CORNA) <br> * page 3, line 29 - page 7, line 3; figures 1-5 * | 1-7 | H 04 N 5/64 <br> A 47 B 96/20 |
| A | EP-A-0 118 622 (BLAUPUNKT) <br> * page 2, line 19 - page 4, line 12; figure 1 * | 1-7 | |

---

-----

TECHNICAL FIELDS SEARCHED (Int. Cl.4)

H 04 N 5/00
A 47 B 96/00

The present search report has been drawn up for all claims

| Place of search | Date of completion of the search | Examiner |
|---|---|---|
| BERLIN | 09-01-1986 | DUDLEY C. |